# EUROPÄISCHE PATENTANMELDUNG

(11) **EP 3 893 161 A1**
(43) Veröffentlichungstag der Anmeldung: **13.10.2021**
(21) Anmeldenummer: 20168995.7
(22) Anmeldetag: 09.04.2020
(51) Int. Cl.: G06N 3/04, G06N 3/08, G06N 7/00

(54) **STEUEREINRICHTUNG ZUM STEUERN EINES TECHNISCHEN SYSTEMS UND VERFAHREN ZUM KONFIGURIEREN DER STEUEREINRICHTUNG**

(71) Anmelder: Siemens Aktiengesellschaft, 80333 München (DE)
(72) Erfinder: Obermayer, Stefan, 91054 Erlangen (DE); Sterzing, Volkmar, 85579 Neubiberg (DE); Tokic, Michel, 88069 Tettnang (DE); Udluft, Steffen, 82223 Eichenau (DE); Weber, Marc Christian, 80339 München (DE)

(57) **Zusammenfassung**

Erfindungsgemäß wird ein Simulationsmodul (SIM) zum physikalischen Simulieren eines technischen Systems (TS) anhand von physikalischen Größen des technischen Systems (TS) bereitgestellt. Weiterhin wird eine zeitliche Abfolge von Steuersignalen (CS) und eine zeitliche Abfolge von gemessenen Zustandsdaten (SD) des technischen Systems (TS) erfasst. Die zeitliche Abfolge der Steuersignale (CS) wird in ein neuronales Netz (NN) eingespeist, und Ausgabedaten (PD) des neuronalen Netzes (NN) werden in das Simulationsmodul (SIM) als Simulationseingabedaten eingespeist. Durch das Simulationsmodul (SIM) wird anhand der Ausgabedaten (PD) des neuronalen Netzes (NN) eine physikalische Simulation durchgeführt, wobei simulierte Zustandsdaten (SSD) des technischen Systems (TS) ermittelt werden. Das neuronale Netz (NN) wird dann darauf trainiert, einen Abstand (D) zwischen den gemessenen Zustandsdaten (SD) und den simulierten Zustandsdaten (SSD) zu verringern. Durch das Training wird die Steuereinrichtung (CTL) in die Lage versetzt, das technischen System (TS) anhand von dessen Steuersignalen (CS) zu simulieren.

## Beschreibung

Bei der Steuerung komplexer technischer Systeme, wie z. B. Windturbinen, Gasturbinen, Motoren, Fertigungsanlagen, Heizungsanlagen oder Robotern werden in zunehmendem Maße Simulationsverfahren eingesetzt, die ein physisches Verhalten des zu steuernden technischen Systems simulieren. Häufig wird dabei angestrebt, einen sogenannten digitalen Zwilling des technischen Systems bereitzustellen, der sich in der Simulation im Wesentlichen wie dieses technische System verhält. Ein solcher digitaler Zwilling kann dann insbesondere zum optimierten Steuern, zum Testen sowie zum Optimieren des technischen Systems abhängig von einem gemäß der Simulation zu erwartenden Verhalten des technischen Systems eingesetzt werden.

Zur Erstellung derartiger Simulationsmodelle werden häufig datenbasierte Verfahren des maschinellen Lernens eingesetzt. Hierbei werden insbesondere künstliche neuronale Netze darauf trainiert, ausgehend von Betriebsdaten des zu simulierenden technischen Systems ein resultierendes physisches Verhalten des technischen Systems zu reproduzieren und damit zu simulieren. Für ein erfolgreiches Training werden jedoch in der Regel große Mengen von Betriebsdaten des technischen Systems als Trainingsdaten benötigt. Die Trainingsdaten sollten zudem die Betriebszustände und Betriebsbedingungen des technischen Systems möglichst repräsentativ abdecken.

In vielen Fällen zeigt sich indessen, dass derartige datengetrieben trainierte Simulationen nur unter solchen Betriebszuständen und Betriebsbedingungen sinnvolle Ergebnisse liefern, die durch die verwendeten Trainingsdaten abgedeckt sind. Außerhalb derartiger Betriebszustände oder Betriebsbedingungen führt eine solche Simulation dagegen oft zu unrealistischen oder grob abweichenden Simulationsergebnissen.

Es ist Aufgabe der vorliegenden Erfindung, eine Steuereinrichtung zum Steuern eines technischen Systems sowie ein Verfahren zum Konfigurieren der Steuereinrichtung anzugeben, die eine bessere oder effizientere Simulation des technischen Systems erlauben.

Gelöst wird diese Aufgabe durch ein Verfahren mit den Merkmalen des Patentanspruchs 1, durch eine Steuereinrichtung mit den Merkmalen des Patentanspruchs 9, durch ein Computerprogrammprodukt mit den Merkmalen des Patentanspruchs 10 sowie durch ein computerlesbares Speichermedium mit den Merkmalen des Patentanspruchs 11.

Zum Konfigurieren einer Steuereinrichtung für ein technisches System wird ein Simulationsmodul zum physikalischen Simulieren des technischen Systems anhand von als Simulationseingabedaten eingespeisten physikalischen Größen des technischen Systems bereitgestellt. Weiterhin wird eine zeitliche Abfolge von Steuersignalen und eine zeitliche Abfolge von gemessenen Zustandsdaten des technischen Systems erfasst. Die zeitliche Abfolge der Steuersignale wird in ein neuronales Netz eingespeist, und Ausgabedaten des neuronalen Netzes werden in das Simulationsmodul als Simulationseingabedaten eingespeist. Durch das Simulationsmodul wird anhand der Ausgabedaten des neuronalen Netzes eine physikalische Simulation durchgeführt, wobei simulierte Zustandsdaten des technischen Systems ermittelt werden. Das neuronale Netz wird dann darauf trainiert, einen Abstand zwischen den gemessenen Zustandsdaten und den simulierten Zustandsdaten zu verringern. Durch das Training wird die Steuereinrichtung zum Simulieren des technischen Systems anhand von Steuersignalen eingerichtet.

Zum Ausführen des erfindungsgemäßen Verfahrens sind eine entsprechende Steuereinrichtung, ein Computerprogrammprodukt sowie ein computerlesbares, vorzugsweise nichtflüchtiges Speichermedium vorgesehen.

Das erfindungsgemäße Verfahren sowie die erfindungsgemäße Steuereinrichtung können beispielsweise mittels eines oder mehrerer Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Durch das Verfahren kann das neuronale Netz automatisch darauf trainiert werden, vom Simulationsmodul als Simulationseingabedaten benötigte physikalische Größen anhand von Steuersignalen des technischen Systems zu ermitteln. Die Verwendung eines physikbasierten Simulationsmoduls erlaubt in der Regel eine genauere und gegenüber Störeiflüssen oder Wechseln von Betriebsbedingungen weniger empfindliche Simulation eines technischen Systems als ein rein datengetriebener Simulator. Darüber hinaus werden in der Regel erheblich weniger Trainingsdaten dazu benötigt, um ein neuronales Netz zum Ermitteln von physikalischen Größen anhand von Steuersignalen zu befähigen, als um einen vollständig datengetriebenen Simulator zu trainieren. Zudem können wechselnde physikalische Einflüsse durch das physikbasierte Simulationsmodul meist auf einfache Weise berücksichtigt werden, während ein rein datengetriebener Simulator häufig neu trainiert werden müsste. Da eine physikbasierte Simulation verschiedene Parametrierungen haben kann, ist sie in der Regel vielfach wiederverwendbar, und muss bei kleinen Änderungen des technischen Systems nicht neu erstellt werden.

Vorteilhafte Ausführungsformen und Weiterbildungen der Erfindung sind in den abhängigen Ansprüchen angegeben.

Gemäß einer vorteilhaften Ausführungsformen der Erfindung kann durch das trainierte neuronale Netz und das Simulationsmodul ein hybrider Simulator zum Simulieren des technischen Systems anhand von Steuersignalen des technischen Systems gebildet werden. Das technische System kann dann abhängig von einer Simulation des hybriden Simulators gesteuert werden. Der hybride Simulator kann insbesondere als digitaler Zwilling des technischen Systems verwendet werden.

Vorteilhafterweise können verschiedene Steuersignalvarianten in den hybriden Simulator eingespeist werden und jeweils eine simulierte Reaktion des technischen Systems bewertet werden. Abhängig von den Bewertungsergebnissen kann dann eine der Steuersignalvarianten selektiert werden, um das technische System mittels der selektierten Steuersignalvariante anzusteuern. Vorzugweise kann hierbei eine Steuersignalvariante selektiert werden, die zu einer besonders vorteilhaften oder in anderer Hinsicht optimalen simulierten Reaktion des technischen Systems führt. Auf diese Weise kann eine optimierte Steuerung des technischen Systems beispielsweise im Rahmen einer modellprädiktiven Regelung (MPC: Model Predictive Control) implementiert werden.

Nach einer vorteilhaften Weiterbildung der Erfindung können eine Vielzahl von Steuersignalen generiert werden und mittels des hybriden Simulators jeweils eine simulierte Reaktion des technischen Systems ermittelt werden. Anhand der Vielzahl von Steuersignalen und der simulierten Reaktionen kann ein weiteres neuronales Netz darauf trainiert werden, simulierte Reaktionen anhand von Steuersignalen zu reproduzieren. Der hybride Simulator kann dann zumindest teilweise durch das trainierte weitere neuronale Netz ersetzt werden. Dies ist insofern vorteilhaft, als ein trainiertes neuronales Netz häufig mit erheblich geringerem Rechenaufwand ausgewertet werden kann als eine physikbasierte Simulation.

Gemäß weiterer vorteilhafter Ausführungsvarianten der Erfindung können gemessene Zustandsdaten, simulierte Zustandsdaten, externe Zustandsdaten über einen Zustand eines externen Systems und/oder Umgebungsdaten über eine Umgebung des technischen Systems als zusätzliche Eingabedaten in das neuronale Netz eingespeist werden. Insofern physikalische Größen des technischen Systems häufig auch von dessen Umgebung oder von externen Systemen abhängen, kann ein Trainingserfolg in der

Regel erheblich verbessert werden, wenn die Einflussgrößen ebenfalls in das neuronale Netz eingespeist werden. Durch die Einspeisung von simulierten Zustandsdaten können insbesondere Veränderungen des technischen Systems gegenüber der Simulation berücksichtigt, detektiert und/oder kompensiert werden.

Ein Ausführungsbeispiel der Erfindung wird nachfolgend anhand der Zeichnung näher erläutert. Dabei zeigen jeweils in schematischer Darstellung:
- Figur 1: eine erfindungsgemäße Steuereinrichtung in einer Konfigurationsphase,
- Figur 2: die Steuereinrichtung beim Steuern eines technischen Systems und
- Figur 3: die Steuereinrichtung in einer weiteren Konfigurationsphase.

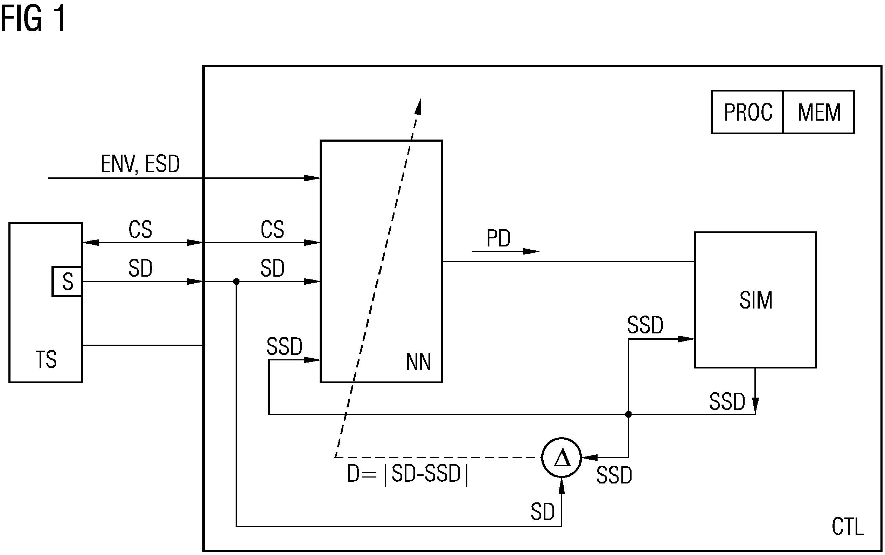

In Figur 1 ist eine erfindungsgemäße Steuereinrichtung CTL in einer Konfigurationsphase schematisch dargestellt. Die Steuereinrichtung CTL dient zum Steuern eines technischen Systems TS, z. B. einer Gasturbine, einer Windturbine, eines Solarkraftwerks, einer Verbrennungskraftmaschine, eines Motors, eines Kraftfahrzeugs, einer Fertigungsanlage, eines Verkehrsleitsystems, einer Energiesteuerung für ein Gebäude, eines Roboters oder eines Energieübertragungsnetzes. Unter einem technischen System sei insbesondere auch eine Komponente oder ein Teilsystem eines zusammengesetzten technischen Systems verstanden. Im vorliegenden Ausführungsbeispiel wird als technisches System TS eine Heizungsanlage für ein Gebäude betrachtet.

Die Steuereinrichtung CTL verfügt über eine oder mehrere Prozessoren PROC zum Ausführen von Verfahrensschritten der Steuereinrichtung CTL sowie über einen oder mehrere mit dem Prozessor PROC gekoppelte Speicher MEM zum Speichern der von der Steuereinrichtung CTL zu verarbeitenden Daten.

Die Steuereinrichtung CTL ist in Figur 1 extern zum technischen System TS dargestellt und mit diesem gekoppelt. Alternativ oder zusätzlich kann die Steuereinrichtung CTL auch ganz oder teilweise in das technische System TS integriert sein.

Das technische System TS verfügt über eine Sensorik S zum Messen oder Erfassen von Messgrößen, die einen Zustand des technischen Systems TS quantifizieren. Die Messgrößen werden in Form von gemessenen Zustandsdaten SD von der Sensorik S zur Steuerung CTL übermittelt und von dieser erfasst. Die gemessenen Zustandsdaten SD können beispielsweise Daten über Temperatur, Druck oder Reibung im technischen System TS oder andere physikalische Daten umfassen. Weiterhin können Daten über eine Auslastung oder einen Ressourcenverbrauch des technischen Systems TS enthalten sein. Im Fall einer Heizungsanlage kann die Sensorik S beispielsweise über Temperatursensoren zum Messen einer Raumtemperatur oder einer Wassertemperatur verfügen.

Das technische System TS wird mittels und anhand von Steuersignalen CS gesteuert. Die Steuersignale CS können Stellsignale, Steuerdaten oder andere für die Steuerung des technischen Systems TS relevante Signale umfassen und unterschiedliche Steuergrößen betreffen. Derartige Steuersignale können beispielsweise durch eine Betätigung von Drehknöpfen, von Schaltern, von Gaspedalen oder durch andere Benutzeraktionen erzeugt werden oder für eine Ansteuerung von Komponenten des technischen Systems TS verwendet werden. Die Steuersignale CS können im technischen System TS erfasst und zur Steuereinrichtung CTL übermittelt werden, z. B. eine durch einen Benutzer vorgenommene Thermostateinstellung, oder durch die Steuereinrichtung CTL zum Steuern des technischen Systems TS erzeugt und zu diesem übertragen werden, z. B. ein Einschaltsignal für eine Pumpe. Darüber hinaus können die Steuersignale CS auch Steuersignale von externen Komponenten umfassen. Die Steuersignale CS werden fortlaufend in zeitlicher Abfolge, z. B. alle hundert Millisekunden erfasst. Darüber hinaus werden durch die Steuereinrichtung CTL die gemessenen Zustandsdaten SD fortlaufend in korrespondierender zeitlicher Abfolge erfasst. Bei einer Heizungsanlage können beispielsweise ein Stellsignal für einen Thermostaten als Steuersignal und eine Raumtemperatur oder Wassertemperatur als gemessene Zustandsdaten erfasst werden.

Die Steuereinrichtung CTL weist erfindungsgemäß ein Simulationsmodul SIM zur physikalischen Simulation des technischen Systems TS auf. Das Simulationsmodul SIM führt eine physikbasierte, auf mechanischen, thermodynamischen oder anderen physikalischen Modellen gestützte Simulation aus. Die physikalischen Modelle bilden hierbei physikalische, naturgesetzliche Wirkungszusammenhänge des technischen Systems ab. Das Simulationsmodul SIM wertet diese Wirkungszusammenhänge beispielsweise durch numerisches Lösen von Bewegungsgleichungen, thermodynamischen Gleichungen oder anderen statischen oder dynamischen Gleichungen für Elemente des technischen Systems TS aus. Für derartige physikbasierte Simulationen sind eine Vielzahl von hinreichend genauen physikalischen Modellen verfügbar.

Die Simulationen werden durch das Simulationsmodul SIM anhand von physikalischen Größen durchgeführt, die für das physikalische Verhalten des technischen Systems TS maßgeblich sind oder dieses Verhalten zumindest beeinflussen. Derartige physikalische Größen können beispielsweise Temperaturen, Kräfte, Wärmeströme, Durchflussmengen oder andere physikalische Eigenschaften des technischen Systems TS mit physikalischer Bedeutung umfassen. Zur Durchführung der Simulationen benötigt das Simulationsmodul SIM physikalische Simulationseingabedaten PD, die diese physikalischen Größen quantifizieren.

In der Praxis tritt indessen häufig das Problem auf, dass sich ein physikalisches Simulationsmodell auf physikalische Größen stützt, die nur schwer messbar sind. So können Temperaturen, Kräfte oder Wärmeströme im Inneren einer Maschine zwar für ein Verhalten und damit für eine Simulation dieser Maschine maßgeblich, aber nur sehr schwer zu messen sein. Falls derartige physikalische Größen nicht oder nur ungenau verfügbar sind, kann die Genauigkeit der Simulation erheblich beeinträchtigt werden.

Anders als manche physikalischen Größen sind Steuersignale eines technischen Systems häufig leichter erfassbar. Die verfügbaren Steuersignale können jedoch häufig nicht direkt in physikalischen Simulationsmodellen verwendet werden, da sie nicht zu den physikalischen Größen des Simulationsmodells passen und nicht in die zugrunde liegenden physikalischen Gleichungen einsetzbar sind. Wenn ein Zusammenhang zwischen Steuersignalen und physikalischen Größen a priori nicht bekannt ist, können diese physikalischen Gleichungen nicht verwendet werden. Falls beispielsweise ein Heizkörper durch einen drehbaren Thermostaten im Bereich von 1 bis 5 eingestellt werden kann, kann ein die Zahlen 1 bis 5 quantifizierendes Steuersignal in der Regel nicht direkt in eine physikalische Gleichung zur thermodynamischen Simulation des Heizkörpers eingesetzt werden.

Darüber hinaus hängt ein Verhalten des technischen Systems TS in vielen Fällen nicht nur von internen Steuersignalen ab, sondern auch von einer Umgebung des technischen Systems und/oder von externen Systemen. So ist beispielsweise für einen Wärmestrom in einem Heizkörper nicht nur eine Durchflussmenge an Warmwasser, sondern auch die Temperatur des Wassers maßgeblich, welche eventuell nicht von der Heizung, sondern von einem externen Wärmeerzeuger bestimmt werden könnte. In solchen Fällen können die für die Simulation maßgeblichen physikalischen Größen in sehr komplexer Weise von einer Vielzahl von Steuersignalen oder externen Einflussfaktoren abhängig sein, was eine direkte Verwendung in physikbasierten Simulationsmodellen erheblich erschwert.

Erfindungsgemäß wird nun anstatt die Simulation auf schwer oder ungenau zu messende physikalische Größen zu stützen, ein künstliches neuronales Netz NN mit dem Ziel trainiert, die für das Simulationsmodel SIM benötigten physikalischen Größen zu ermitteln oder zumindest Daten zu ermitteln, die zu zutreffenden Simulationsergebnissen führen. Die benötigen physikalischen Größen sollen durch das trainierte neuronale Netz NN aus den erfassten Steuersignalen CS und anderen leicht zu erfassenden Daten ermittelt werden.

Zum Training des neuronalen Netzes NN werden eine zeitliche Abfolge der Steuersignale CS und eine zeitliche Abfolge der gemessenen Zustandsdaten SD durch die Steuereinrichtung CTL erfasst und in das neuronale Netz NN als Eingabedaten eingespeist. Als weitere Eingabedaten werden Umgebungsdaten ENV über eine Umgebung des technischen Systems TS sowie externe Zustandsdaten ESD über einen Zustand eines externen Systems durch die Steuereinrichtung CTL erfasst und in das neuronale Netz NN eingespeist. Die Umgebungsdaten ENV können insbesondere eine Umgebungstemperatur, Wetterdaten, Zeitangaben und/oder Datumsangaben umfassen. Die externen Zustandsdaten ESD können z. B. einen Füllstand eines Öltanks oder eine Temperatur in einem externen Wärmeerzeuger betreffen. Insofern die physikalischen Größen des technischen Systems TS erheblich von seiner Umgebung und angekoppelten externen Systemen abhängig sein können, wird durch die zusätzliche Berücksichtigung der Umgebungsdaten ENV und der externen Zustandsdaten ESD ein Trainingserfolg in der Regel erheblich verbessert.

Das Training des neuronalen Netzes NN erfolgt vorzugsweise mittels eines Verfahrens des maschinellen bestärkenden Lernens. Unter einem Training sei hierbei allgemein eine Optimierung einer Abbildung von Eingabedaten, hier CS, SD, ENV und ESD, eines neuronalen Netzes, hier NN, auf Ausgabedaten, hier PD, verstanden. Diese Abbildung wird nach vorgegebenen, gelernten und/oder zu lernenden Kriterien während einer Trainingsphase optimiert. Als Kriterien können hierbei z. B. bei Steuermodellen ein Erfolg einer Steueraktion, bei Prädiktionsmodellen ein Prädiktionsfehler oder bei Simulationsmodellen - wie im vorliegenden Fall - ein Simulationsfehler herangezogen werden. Durch das Training können beispielsweise Vernetzungsstrukturen von Neuronen des neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar.

Im vorliegenden Fall werden die Ausgabedaten PD des neuronalen Netzes NN als Simulationseingabedaten in das Simulationsmodul SIM eingespeist. Die Ausgabedaten PD können dabei direkt oder über einen Zwischenverarbeitungsschritt in das Simulationsmodul SIM eingespeist werden. Anhand der Simulationseingabedaten PD führt das Simulationsmodul SIM eine physikalische Simulation durch, wobei insbesondere simulierte Zustandsdaten SSD des technischen Systems TS ermittelt werden. Die simulierten Zustandsdaten werden unter anderem als Eingabedaten in das Simulationsmodul SIM zurückgeführt, um anhand des aktuellen simulierten Zustands im nächsten Zeitschritt einen simulierten Folgezustand zu ermitteln. Darüber hinaus werden die simulierten Zustandsdaten SSD vorzugsweise als zusätzliche Eingabedaten in das neuronale Netz NN eingespeist. Auf diese Weise können Veränderungen des technischen Systems TS, die sich häufig in einer zunehmenden Diskrepanz zwischen den gemessenen Zustandsdaten SD und den simulierten Zustandsdaten SSD niederschlagen, beim Training berücksichtigt werden.

Durch das Training wird angestrebt, dass die simulierten Zustandsdaten SSD möglichst gut mit den tatsächlich gemessenen Zustandsdaten SD übereinstimmen. Zu diesem Zweck wird ein Abstand D zwischen den gemessenen Zustandsdaten SD und den dazu korrespondierenden, simulierten Zustandsdaten SSD ermittelt. Der Abstand D repräsentiert hierbei einen Simulationsfehler des mit dem neuronalen Netz NN zusammenwirkenden Simulationsmoduls SIM.

Der Abstand D wird, wie in Figur 1 durch einen strichlierten Pfeil angedeutet, zum neuronalen Netz NN zurückgeführt. Anhand des zurückgeführten Abstands D wird das neuronale Netz NN darauf trainiert, diesen Abstand D und damit den Simulationsfehler zu minimieren. Falls die Zustandsdaten SD und SSD durch Datenvektoren repräsentiert sind, kann der Abstand D beispielsweise als euklidischer Abstand oder gewichteter euklidischer Abstand zwischen diesen Datenvektoren ermittelt werden.

Zur Minimierung des Abstands D ist eine Vielzahl von effizienten Optimierungsverfahren verfügbar, z. B. gradientenbasierte Optimierungsverfahren, insbesondere stochastische Gradientenabstiegsverfahren, Partikelschwarmoptimierungen und/oder genetische Optimierungsverfahren. Bei gradientenbasierten Optimierungsverfahren können Differenzialquotienten oder Differenzenquotienten der physikbasierten Simulation ermittelt und beim Training in effizienzsteigender Weise berücksichtigt werden. Falls Differenzialquotienten oder Differenzenquotienten der Simulation nicht verfügbar sind, erweisen sich Partikelschwarmoptimierungen oder genetische Optimierungsverfahren als vorteilhaft.

Durch die Minimierung des Abstands D wird das neuronale Netz NN automatisch darauf trainiert, die vom Simulationsmodul SIM als Simulationseingabedaten benötigten physikalischen Größen aus den Eingabedaten CS, SD, ENV und ESD des neuronalen Netzes NN zu ermitteln. Dies basiert auf der Erwägung, dass solange das neuronale Netz NN nicht die vom Simulationsmodul SIM benötigten physikalischen Größen mit hinreichender Genauigkeit ermittelt, die darauf basierenden simulierten Zustandsdaten SSD nicht mit der gemessenen Realität übereinstimmen würden. Die Abweichung von der Realität wird aber gerade durch das oben beschriebene Training minimiert.

Durch das Training des neuronalen Netzes NN wird die Steuereinrichtung CTL zum Simulieren des technischen Systems TS anhand von dessen Steuersignalen CS und anderen leicht erfassbaren Daten, hier SD, ENV und SSD konfiguriert.

Die Verwendung eines physikbasierten Simulationsmoduls SIM erlaubt gegenüber einem rein datengetriebenen Simulator eine genauere und gegenüber Störeinflüssen oder Wechseln von Betriebsbedingungen weniger empfindliche Simulation. Durch das trainierte neuronale Netz NN können auch schwer messbare physikalische Größen mit hinreichender Genauigkeit ermittelt werden, die für eine physikbasierte Simulation vom Simulationsmodul SIM benötigt werden oder zumindest genauigkeitssteigernd sind. Es erweist sich, dass eine datengetriebene Ermittlung der physikalischen Größen in der Regel erheblich stabiler trainierbar ist als eine vollständig datengetriebene Simulation. Zudem werden meist erheblich weniger Trainingsdaten benötigt. Insbesondere können Steuersignale und andere leicht erfassbare Daten als Eingabedaten für die Simulation verwendet werden, ohne auf die Vorteile einer physikbasierten Simulation zu verzichten.

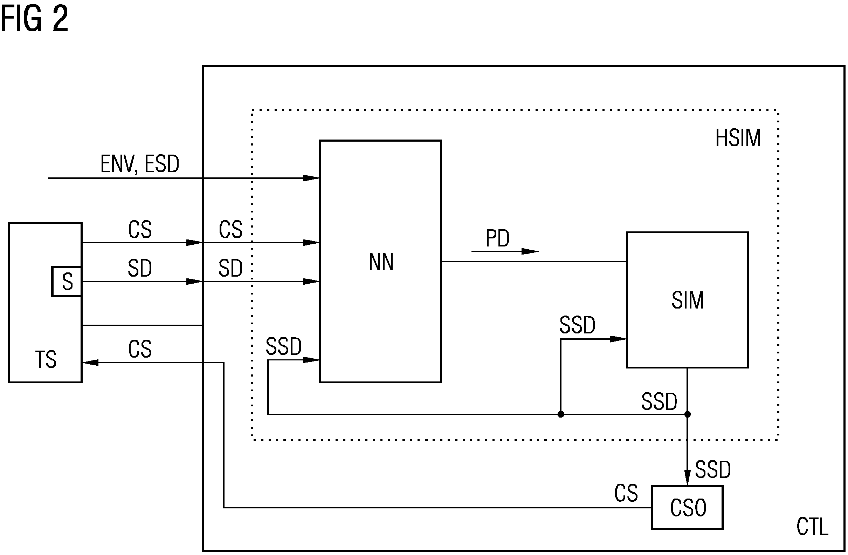

Figur 2 zeigt die Steuereinrichtung CTL beim Steuern des technischen Systems TS in schematischer Darstellung. Insofern in Figur 2 die gleichen oder korrespondierende Bezugszeichen wie in Figur 1 verwendet werden, bezeichnen diese Bezugszeichen die gleichen oder korrespondierende Entitäten, die insbesondere wie oben beschrieben, implementiert oder ausgestaltet sein können.

Durch das Simulationsmodul SIM und das vorgeschaltete, trainierte neuronale Netz NN wird ein hybrider Simulator HSIM gebildet. Der hybride Simulator HSIM simuliert das technische System TS anhand von Steuersignalen CS und anderen leicht erfassbaren Daten, hier SD, ENV und ESD, anstatt anhand von gegebenenfalls schwer messbaren, aber vom Simulationsmodul SIM benötigten physikalischen Größen. Insofern der hybride Simulator HSIM sich in vielerlei Hinsicht wie das technische System TS verhält, kann der hybride Simulator HSIM insbesondere als digitaler Zwilling des technischen Systems TS verwendet werden.

Wie oben beschrieben, werden durch das trainierte neuronale Netz NN aus den Steuersignalen CS, den gemessenen Zustandsdaten SD, den Umgebungsdaten ENV und den externen Zustandsdaten ESD physikalische Größen des technischen Systems TS abgeleitet, die als Simulationseingabedaten PD in das Simulationsmodul SIM eingespeist werden. Das Simulationsmodul SIM ermittelt daraus die simulierten Zustandsdaten SSD, die zu einer Steuersignalausgabe CSO der Steuereinrichtung CTL übermittelt werden. Die Steuersignalausgabe CSO erzeugt anhand der simulierten Zustandsdaten SSD Steuersignale CS zum Steuern des technischen Systems TS. Diese Steuersignale CS werden zum technischen System TS übermittelt und steuern dieses an.

Gegebenenfalls können durch einen Steuersignalgenerator (nicht dargestellt) Steuersignalvarianten generiert und jeweils in den hybriden Simulator HSIM eingespeist werden. Der hybride Simulator HSIM ermittelt für die Steuersignalvarianten jeweils eine simulierte Reaktion des technischen Systems TS auf die jeweilige Steuersignalvariante. Abhängig von den simulierten Reaktionen wird dann vorzugsweise diejenige Steuersignalvariante durch die Steuersignalausgabe CSO selektiert, die zu einer möglichst günstigen Reaktion des technischen Systems führt. Das technische System TS kann dann durch die Steuersignalausgabe CSO mittels der selektierten Steuersignalvariante in optimierter Weise angesteuert werden.

Der hybride Simulator HSIM kann außer zum Steuern des technischen Systems TS auch zum Testen sowie zur Designoptimierung während eines Designprozesses verwendet werden. Aufgrund der größeren Robustheit der erfindungsgemäßen hybriden Simulation können auch simulative Tests unter ungewöhnlichen Betriebsbedingungen durchgeführt werden, die am realen technischen System mit Risiken verbunden, sehr aufwändig oder unmöglich wären.

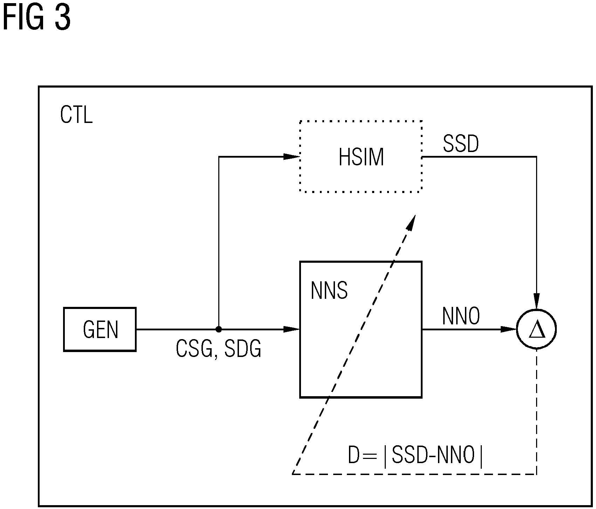

Figur 3 zeigt die Steuereinrichtung CTL in einer weiteren Konfigurationsphase in schematischer Darstellung. Insofern in Figur 3 die gleichen oder korrespondierende Bezugszeichen wie in den vorangegangenen Figuren verwendet werden, bezeichnen diese Bezugszeichen die gleichen oder korrespondierende Entitäten.

In der weiteren Konfigurationsphase wird der das trainierte neuronale Netz NN enthaltende hybride Simulator HSIM dazu genutzt, ein weiteres künstliches neuronales Netz NNS der Steuereinrichtung CTL darauf zu trainieren, die durch den hybriden Simulator HSIM simulierten Reaktionen anhand von Steuersignalen und anderen leicht erfassbaren Daten zu reproduzieren. Dieses Training kann vorzugsweise mittels eines modellbasierten Verfahrens des bestärkenden Lernens durchgeführt werden.

Zum Training des Weiteren neuronalen Netzes NNS werden durch einen Generator GEN der Steuereinrichtung CTL eine Vielzahl von Steuersignalen CSG und eine Vielzahl von Zustandsdaten SDG generiert und sowohl in den trainierten hybriden Simulator HSIM als auch in das zu trainierende weitere neuronale Netz NNS als Eingabedaten eingespeist. Zusätzlich können, wie oben beschrieben, auch noch eine Vielzahl von Umgebungsdaten ENV und/oder eine Vielzahl von externen Zustandsdaten ESD durch den Generator GEN generiert und in den hybriden Simulator HSIM und das weitere neuronale Netz NNS als Eingabedaten eingespeist werden.

Der Generator GEN ist spezifisch dazu eingerichtet, Steuersignale, Zustandsdaten und gegebenenfalls Umgebungsdaten und externe Zustandsdaten zu generieren, die möglichst alle erreichbaren Betriebszustände oder Betriebsbedingungen des technischen Systems TS abdecken. Anhand der generierten Eingabedaten werden durch den hybriden Simulator HSIM, wie oben beschrieben, simulierte Zustandsdaten SSD des technischen Systems TS erzeugt und durch das weitere neuronale Netz NNS Ausgabedaten NNO. Analog zum oben beschriebenen Training des neuronalen Netzes NN wird durch die Steuereinrichtung CTL ein Abstand D zwischen den simulierten Zustandsdaten SSD und den Ausgabedaten NNO des Weiteren neuronalen Netzes NNS ermittelt. Der ermittelte Abstand D wird, wie durch einen strichlierten Pfeil veranschaulicht, zum weiteren neuronalen Netz NNS zurückgeführt, um dieses darauf zu trainieren, den Abstand D zu minimieren. Für diese Minimierung stehen, wie oben bereits erwähnt, eine Vielzahl von Optimierungsverfahren, insbesondere des bestärkenden Lernens zur Verfügung.

Das weitere neuronale Netz NNS wird durch das Training zum Simulieren des technischen Systems TS anhand von Steuersignalen und anderen leicht erfassbaren Größen konfiguriert. Das weitere neuronale Netz NNS erwirbt hierdurch gewissermaßen die Fähigkeit des hybriden Simulators HSIM zur steuersignalbasierten Simulation des technischen Systems TS.

Nach dem Training kann der hybride Simulator HSIM durch das trainierte weitere neuronale Netz NNS zumindest teilweise ersetzt werden. Dies ist insofern vorteilhaft, als eine Auswertung eines trainierten neuronalen Netzes, hier NNS in vielen Fällen erheblich schneller als eine physikbasierte Simulation erfolgen kann. Somit kann in dem in Figur 2 dargestellten Wirkungszusammenhang das trainierte weitere neuronale Netz NNS anstelle des hybriden Simulators HSIM zum Steuern des technischen Systems TS verwendet werden. Aufgrund des gegenüber dem hybriden Simulator HSIM in der Regel erheblich geringeren Rechenaufwands können Echtzeiterfordernisse, z. B. im Rahmen einer modellprädiktiven Steuerung in der Regel besser erfüllt werden.

## Patentansprüche

1. Computerimplementiertes Verfahren zum Konfigurieren einer Steuereinrichtung (CTL) für ein technisches System (TS), wobei
a) ein Simulationsmodul (SIM) bereitgestellt wird zum physikalischen Simulieren des technischen Systems (TS) anhand von als Simulationseingabedaten eingespeisten physikalischen Größen des technischen Systems (TS),
b) eine zeitliche Abfolge von Steuersignalen (CS) und eine zeitliche Abfolge von gemessenen Zustandsdaten (SD) des technischen Systems (TS) erfasst werden,
c) die zeitliche Abfolge der Steuersignale (CS) in ein neuronales Netz (NN) eingespeist wird,
d) Ausgabedaten (PD) des neuronalen Netzes (NN) in das Simulationsmodul (SIM) als Simulationseingabedaten eingespeist werden,
e) durch das Simulationsmodul (SIM) eine physikalische Simulation anhand der Ausgabedaten (PD) des neuronalen Netzes (NN) durchgeführt wird und dabei simulierte Zustandsdaten (SSD) des technischen Systems (TS) ermittelt werden,
f) das neuronale Netz (NN) darauf trainiert wird, einen Abstand (D) zwischen den gemessenen Zustandsdaten (SD) und den simulierten Zustandsdaten (SSD) zu verringern, und
g) die Steuereinrichtung (CTL) durch das Training zum Simulieren des technischen Systems (TS) anhand von Steuersignalen (CS) des technischen Systems (TS) eingerichtet wird.

2. Verfahren nach Anspruch 1, **dadurch gekennzeichnet,**
**dass** durch das trainierte neuronale Netz (NN) und das Simulationsmodul (SIM) ein hybrider Simulator (HSIM) zum Simulieren des technischen Systems (TS) anhand von Steuersignalen (CS) des technischen Systems (TS) gebildet wird, und
**dass** das technische System (TS) abhängig von einer Simulation des hybriden Simulators (HSIM) gesteuert wird.

3. Verfahren nach Anspruch 2, **dadurch gekennzeichnet,**
**dass** verschiedene Steuersignalvarianten in den hybriden Simulator (HSIM) eingespeist werden und jeweils eine simulierte Reaktion des technischen Systems (TS) bewertet wird,
**dass** abhängig von den Bewertungsergebnissen eine der Steuersignalvarianten selektiert wird, und
**dass** das technische System (TS) mittels der selektierten Steuersignalvariante angesteuert wird.

4. Verfahren nach Anspruch 2 oder 3, **dadurch gekennzeichnet, dass** eine Vielzahl von Steuersignalen (CSG) generiert wird und mittels des hybriden Simulators (HSIM) jeweils eine simulierte Reaktion des technischen Systems (TS) ermittelt wird, dass anhand der Vielzahl von Steuersignalen (CSG) und der simulierten Reaktionen ein weiteres neuronales Netz (NNS) darauf trainiert wird, simulierte Reaktionen anhand von Steuersignalen zu reproduzieren, und
dass der hybride Simulator (HSIM) zumindest teilweise durch das trainierte weitere neuronale Netz (NNS) ersetzt wird.

5. Verfahren nach einem der vorhergehenden Ansprüche, **dadurch gekennzeichnet, dass**
- gemessene Zustandsdaten (SD),
- simulierte Zustandsdaten (SSD),
- externe Zustandsdaten (ESD) über einen Zustand eines externen Systems und/oder
- Umgebungsdaten (ENV) über eine Umgebung des technischen Systems (TS)
als Eingabedaten in das neuronale Netz (NN) eingespeist werden.

6. Verfahren nach einem der vorhergehenden Ansprüche, **dadurch gekennzeichnet, dass**
zum Training des neuronalen Netzes (NN) eine Partikelschwarmoptimierung, ein gradientenbasiertes Optimierungsverfahren, ein stochastisches Gradientenabstiegsverfahren und/oder ein genetisches Optimierungsverfahren verwendet wird.

7. Verfahren nach einem der vorhergehenden Ansprüche, **dadurch gekennzeichnet, dass**
das neuronale Netz (NN) ein rekurrentes neuronales Netz, ein faltendes neuronales Netz, ein bayessches neuronales Netz, einen Autoencoder und/oder eine Deep-Learning-Architektur implementiert.

8. Verfahren nach einem der vorhergehenden Ansprüche, **dadurch gekennzeichnet,**
**dass** das technische System (TS) eine Turbine, ein Solarkraftwerk, eine Verbrennungskraftmaschine, ein Motor, ein Kraftfahrzeug, eine Fertigungsanlage, ein Verkehrsleitsystem, eine Energiesteuerung für ein Gebäude, eine Heizungsanlage, ein Roboter, ein Energieübertragungsnetz oder eine andere Maschine, ein anderes Gerät oder eine andere Anlage ist.

9. Steuereinrichtung (CTL) zum Steuern eines technischen Systems (TS) eingerichtet zum Ausführen eines Verfahrens nach einem der vorhergehenden Ansprüche.

10. Computerprogrammprodukt eingerichtet zum Ausführen eines Verfahrens nach einem der Ansprüche 1 bis 8.

11. Computerlesbares Speichermedium mit einem Computerprogrammprodukt nach Anspruch 10.
